# EUROPÄISCHE PATENTSCHRIFT

(11) **EP 1 402 291 B1**
(45) Veröffentlichungstag und Bekanntmachung des Hinweises auf die Patenterteilung: **30.11.2005**
(21) Anmeldenummer: 02737717.5
(22) Anmeldetag: 25.06.2002
(51) Int. Cl.: G02B 5/30, G02B 27/28

(54) **VERFAHREN ZUR ERZEUGUNG VON LICHT EINES GEGEBENEN POLARISATIONSZUSTANDES**
METHOD FOR PRODUCING LIGHT OF A GIVEN POLARISATION STATE
PROCEDE DE PRODUCTION D'UNE LUMIERE PRESENTANT UN ETAT DE POLARISATION DONNE

(30) Priorität: 04.07.2001 CH 123601
(43) Veröffentlichungstag der Anmeldung: 31.03.2004
(73) Patentinhaber: Unaxis Balzers Aktiengesellschaft, 9496 Balzers (LI)
(72) Erfinder: EDLINGER, Johannes, A-6800 Feldkirch (AT); HEINE-KEMPKENS, Claus, CH-7000 Chur (CH); HÄUSLER, Detlev, FL-9495 Triesen (LI)
(74) Vertreter: Rigling, Peter Daniel
(86) Internationale Anmeldenummer: PCT/CH2002/000343
(87) Internationale Veröffentlichungsnummer: WO 2003/019246

(56) Entgegenhaltungen:
- US-A- 4 525 413
- US-A- 5 856 855
- US-A- 5 884 991
- US-A- 6 064 523
- US-A- 6 101 032
- US-A- 6 139 157
- US-B1- 6 208 463

## Beschreibung

Die vorliegende Erfindung betrifft ein Verfahren zur Erzeugung von Licht eines gegebenen Polarisationszustandes, bei dem ein Polarisationszustands-sensitiver Strahlteiler an einem Eingang mit Licht beaufschlagt wird, Licht des gegebenen Polarisationszustandes vom Strahlteiler an einem ersten Ausgang ausgegeben wird, Licht mit vom gegebenen Zustand abweichendem Polarisationszustand, bezüglich dieses Zustandes geändert und ausgegeben wird. Im weiteren betrifft die vorliegende Erfindung eine Polarisator-Anordnung, eine Beleuchtungs-Anordnung, ein Projektionssystem sowie deren Verwendungen.

Aus der US-A-6 139 157 ist ein Verfahren eingangs genannter Art bzw. ein nach diesem Verfahren arbeitendes Beleuchtungssystem bekannt. Nach Durchlaufen eines Lichttunnels sowie eines Linsensystems wird unpolarisiertes Licht einem Polarisationszustands-sensitiven Strahlteiler zugeführt. Während der Anteil des zugeführten unpolarisierten Lichtes, der in einem gegebenen Polarisationszustand polarisiert ist, an einem ersten Ausgang des Strahlteilers ausgegeben wird, wird der Anteil des unpolarisierten Lichtes mit vom gegebenen Polarisationszustand abweichendem Zustand bezüglich dieses Zustandes geändert und an einem zweiten Ausgang des Strahlteilers ausgegeben.

Des Weiteren ist aus US-B1-6 208 463 eine Polarisationsvorrichtung zur Ergänzung eines polarisierten Lichtstrahles mit Hilfe einer Lichtquelle mit unpolarisiertem Licht bekannt. Die Strahlen dieser Lichtquellen sind auf eine Anordnung von Elementen gerichtet, welche Licht mit einer Polarisation quer zu den Elementen durchlässt und welche Licht mit einer Polarisation parallel zu den Elementen reflektiert. Eine Auffangoptik, wie z.B. ein Spiegel, ist derart angeordnet, dass der reflektierte Lichtstrahl in die Richtung des durchgelassenen Lichtstrahles umgelenkt wird. Ein λ/2-Element ist im Pfad des reflektierten Lichtstrahles angeordnet, um die Polarisation des reflektierten Lichtes derart zu ändern, dass beide Lichtstrahlen denselben Polarisationszustand aufweisen.

Diese Vorgehen weisen folgenden Nachteil auf:

Weil das schliesslich in gegebenem Zustand polarisierte Licht an zwei getrennten Bereichen bzw. Ausgängen des Strahlteilers austritt, ist die anschliessende Beleuchtungsoptik zur präzisen Übernahme des Lichtes aus beiden Bereichen auszulegen, was das gesamte System relativ unflexibel und voluminös macht.

Es ist Aufgabe der vorliegenden Erfindung, ein Verfahren bzw. eine nach diesem Verfahren arbeitende Polarisator-Anordnung zu schaffen, welche diesen erwähnten Nachteil behebt.

Dies wird am eingangs erwähnten Verfahren dadurch gelöst, dass mit dem Licht geänderten Polarisationszustandes der Eingang des polarisationssensitiven Strahlteilers erneut beaufschlagt wird und zudem der Polarisationszustand des Lichtes durch Reflexion, vorzugsweise durch Mehrfachreflexion, geändert wird.

Damit wird erreicht, dass praktisch das gesamte unpolarisierte Licht letztendlich mit erwünschtem Polarisationszustand aus dem Strahlteiler austritt. Dies deshalb, weil das Licht so lange am zweiten Ausgang ausgegeben und gedreht wird, bis es mindestens genähert den gegebenen Polarisationszustand aufweist und dann ebenfalls den Strahlteiler am ersten Ausgang verlässt. Des Weiteren wird eine höchst vorteilhafte Realisierungsform erhalten, wie noch gezeigt werden wird.

In einer weiteren bevorzugten Ausführungsform, insbesondere bevorzugt mit der vorerwähnten Reflexions-Zustandsänderung kombinierbar, wird der Polarisationszustand des Lichtes durch eine vorgegebene Verzögerung, vorzugsweise mittels mindestens eines Retarder-Elementes, geändert.

Es ist aus der US 6 139 157 bekannt, das Licht, welches dem Strahlteiler zugeführt wird, vorerst, von einer Lichtquelle mit Reflektor, auf die Apertur eines Lichttunnels zu fokussieren und die Intensitätsverteilung des Lichtes durch die Mehrfachreflexionswirkung des Lichttunnels an seinen peripheren Innenflächen ausgangsseitig zu homogenisieren. Somit ist es also bekannt, für das unpolarisierte, dem Strahlteiler zugeführte Licht eine Strecke mit Mehrfachreflexion aus Intensitätshomogenisierungsgründen vorzusehen.

In einer höchst vorteilhaften Ausführungsform des erfindungsgemässen Verfahrens wird nun das Licht vor Beaufschlagung des Polarisationszustands-sensitiven Strahlteilers ebenfalls durch ein Lichttunnel-Bauelement geführt, mit reflektierender Peripherie und das Licht mit zum gegebenen Polarisationszustand senkrechtem Zustand von dem der Beleuchtungsquelle entgegengesetzten Ende her in das Lichttunnel-Bauelement geführt und daran reflektiert. Damit wird das aus Intensitätshomogenisierungsgründen für das unpolarisierte Licht vorgesehene Lichttunnel-Bauelement gleichzeitig ausgenützt, um den nicht in gegebenem Zustand polarisierten Lichtanteil des unpolarisierten Lichtes bezüglich seines Polarisationszustandes zu ändern und wiederum dem Eingang des Strahlteilers zuzuführen. Damit entsteht eine höchst kompakte und einfache Realisation des erfindungsgemässen Vorgehens.

Bevorzugterweise wird an mindestens einem vom Licht beaufschlagten Bereich im Bauelement mindestens ein eine gegebene, definierte Polarisationszustandsänderung bewirkendes Element vorgesehen, vorzugsweise mindestens eine Retarderplatte.

In einer weiteren bevorzugten Ausführungsform wird das Licht, mit welchem der Eingang des Strahlteilers beaufschlagt wird, mittels einer Lichtquelle und eines Reflektors erzeugt und mindestens ein Teil des Lichtes mit zum gegebenen Polarisationszustand senkrechtem Zustand, mindestens auch, am Reflektor reflektiert und das dort reflektierte Licht dem Eingang des Polarisationszustands-sensitiven Strahlteilers zugeführt.

Dieses letzterwähnte Vorgehen eignet sich insbesondere in Kombination mit Vorsehen des erläuterten Lichttunnel-Bauelementes, indem mit dem erwähnten Reflektor praktisch ein geschlossener Raum zur Apertur des Lichttunel-Bauelementes geschaffen wird, so dass jedenfalls Lichtanteile, welche vom zweiten Ausgang des Strahlteilers herrühren und durch die Apertur des Lichttunnels austreten, nicht verloren sind, sondern durch den Reflektor wieder in das Lichttunnel-Bauelement reflektiert werden. Dabei kann bevorzugterweise der Reflektor ähnlich einer Ulbricht'schen Kugel geformt sein.

In einer weiteren bevorzugten Ausführungsform letztgenannten Vorgehens wird auch an der Reflektorfläche ein eine gegebene Polarisationszustandsänderung bewirkendes Element vorgesehen.

Eine erfindungsgemässe Polarisator-Anordnung ist in Anspruch 8 spezifiziert, mit bevorzugten Ausführungsformen gemäss den Ansprüchen 9 bis 16. Eine erfindungsgemässe Beleuchtungsanordnung ist in Anspruch 17, ein erfindungsgemässes Projektorsystem in Anspruch 19 spezifiziert. Die erfindungsgemässen Anordnungen sowie auch das erfindungsgemässe Verfahren eignen sich ausgezeichnet in der Verwendung im Rahmen von Projektoren bzw. Beleuchtungsapparaten.

Die Erfindung wird anschliessend beispielsweise anhand von Figuren erläutert. Diese zeigen:
- Fig. 1: anhand eines optischen Funktionsblock/Signalflussdiagrammes, das Prinzip des erfindungsgemässen Verfahrens, wonach auch die erfindungsgemässe Polarisator-Anordnung arbeitet;
- Fig. 2: in einer Darstellung analog zu derjenigen von Fig. 1, eine bevorzugte Ausbildung eines polarisationsdrehenden bzw. -ändernden Bauelementes;
- Fig. 3: in einer Darstellung analog zu den Fig. 1 und 2, eine bevorzugte Ausführungsform des erfindungsgemässen Verfahrens bzw. der erfindungsgemässen Anordnung, bei der die gleiche Baugruppe sowohl für die Homogenisierung der Lichtintensitätsverteilung wie auch für die erfindungsgemäss ausgenützte Polarisationszustands-Drehung bzw. -Änderung ausgenützt wird;
- Fig. 4: eine bevorzugte Ausführungsform des anhand von Fig. 3 dargestellten Vorgehens;
- Fig. 5: eine erste bevorzugte Ausführungsform eines vorgesehenen Polarisationszustands-sensitiven Strahlteilers;
- Fig. 6: eine weitere bevorzugte Ausführungsform des erfindungsgemäss eingesetzten Polarisationszustands-sensitiven Strahlteilers, und
- Fig. 7: schematisch, eine erfindungsgemässe Projektionsanordnung unter Einsatz des erfindungsgemässen Verfahrens bzw. der erfindungsgemässen Polarisator-Anordnung in weiter bevorzugter Ausführungsform.

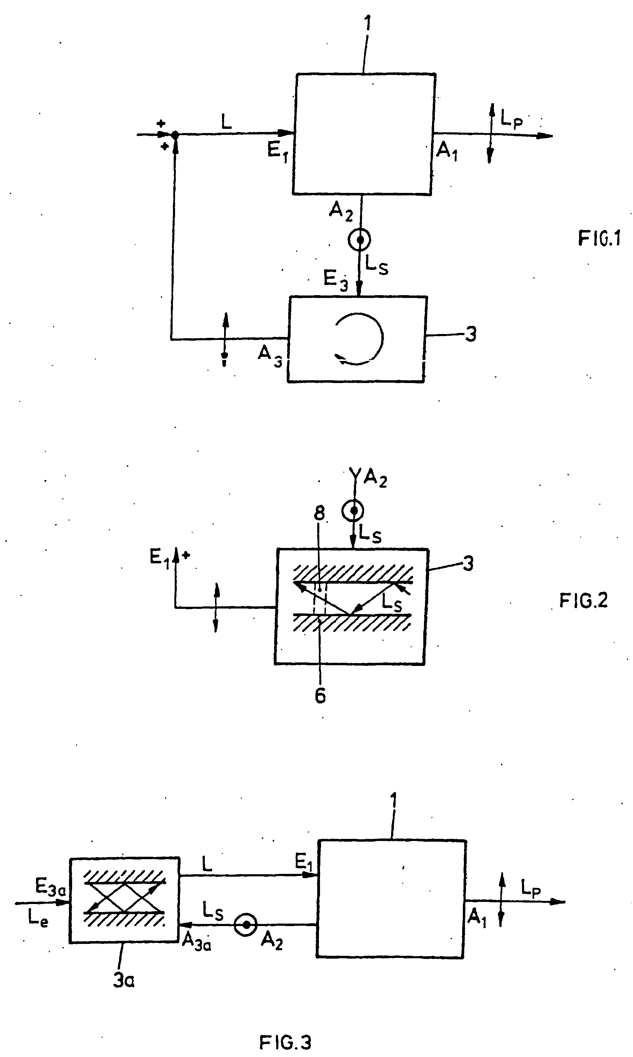

Anhand von Figur 1 soll vorerst das Grundprinzip der vorliegenden Erfindung erläutert werden. Dies anhand eines optischen Funktionsblock/Signalflussdiagrammes.

Unpolarisiertes Licht L, wie es üblicherweise von Projektorlichtquellen ausgeht, wird dem optischen Eingang E₁ eines Polarisationszustands-sensitiven Strahlteilerelementes 1 zugeführt. Der Polarisationsrichtungs-sensitive Strahlteiler 1 gibt an seinem einen optischen Ausgang A₁ den Anteil Lₚ des unpolarisierten Lichtes L aus, der einen gegebenen Polarisationszustand hat, beispielsweise P-polarisiert ist. Der Anteil Lₛ des unpolarisierten Lichtes L, welcher bezüglich des Polarisationszustandes P des an A₁ ausgegebenen Lichtes einen senkrechten Polarisationszustand hat, dem Beispiel folgend also S-polarisiert ist, wird vom Polarisationszustands-sensitiven Strahlteiler 1 an seinem zweitem optischen Ausgang A₂ ausgegeben. Üblicherweise wird der eine Anteil des erwähnten Lichtes L, also beispielsweise Lₚ, durch ein Polarisationsfilter-Schichtsystem am Polarisationszustands-sensitiven Strahlteiler 1 transmittiert, der andere, hier beispielsweise Lₛ, reflektiert.

Am optischen Ausgang A₁ tritt das Licht Lₚ mit dem erwünschten Polarisationszustand aus. Das am Ausgang A₂ des Polarisationszustands-sensitiven Strahlteilers 1 austretende Licht Lₛ wird an einem Polarisationszustands-Dreh- bzw. -Änderungs-Element 3 in seinem Polarisationszustand geändert bzw. gedreht und dem optischen Eingang E₁ des Polarisationszustands-sensitiven Strahlteilers 1 wieder zugeführt. Damit tritt letztendlich mit dem erwünschten Polarisationszustand, beispielsweise P, praktisch das gesamte, dem Strahlteiler 1 zugeführte, vorerst unpolarisierte Licht L als Lₚ aus.

Wie in Figur 2 dargestellt, kann bevorzugterweise das Polarisationszustands-Drehelement 3 realisiert werden, indem das gemäss Fig. 1 am optischen Ausgang A₂ austretende Licht Lₛ einer Mehrfachreflexion unterzogen wird. Durch Reflexionen bleibt in der Regel der Polarisationszustand des Lichtes nicht erhalten. Wird der Polarisationszustand des Lichtes Lₛ auch nur wenig gedreht, so wird doch wiederum ein Anteil P-polarisiert und am Ausgang A₁ als Anteil von Lₚ ausgegeben. Übrige Anteile benötigen möglicherweise mehrere Umläufe über die Anordnung 3, bis ihre Polarisationsrichtung der geforderten P-Polarisation entspricht.

Wie in Fig. 2 dargestellt, kann die Drehung des Polarisationszustandes an der Anordnung 3 bevorzugtertweise zusätzlich durch Vorsehen von diskreten Polarisationsrichtungs-Drehelementen, wie insbesondere von sogenannten "Retarder"-Elementen, verstärkt werden, mittels welchen, dem Prinzip von Fig. 1 vorerst folgend, eine λ/2 Verzögerung des Lichtes Lₛ eingeführt wird, d.h. eine 90°-Drehung der Polarisationsrichtung.

Im Block 3 von Fig. 2 sind schematisch einerseits eine Mehrfachreflexionsanordnung 6 für das Licht Lₛ dargestellt, anderseits, gestrichelt, ein eingebautes, zusätzliches diskretes Polarisationsrichtungs-Drehelement, wie z.B. eine Retarderplatte 8.

Wie einleitend erwähnt, ist es in vielen Anwendungen, wie insbesondere bei Projektoren, oft erwünscht, einen Lichtstrahl bereitzustellen, woran die Intensitätsverteilung möglichst homogen ist. Hierzu ist es bekannt, wie auch eingangs erläutert wurde, dass aus einem sehr kleinen Bereich einer Lichtquelle stammende Licht erst einem Lichttunnel zuzuführen, woran, durch Mehrfachreflexion des von der Lichtquelle stammenden Lichtes, ausgangsseitig, eine homogene, üblicherweise der Form eines bildgebenden Elementes angepasste Intensitätsverteilung bereitgestellt wird.

Wenn nun aber eingangsseitig des Polarisationszustands-sensitiven Strahlteilers 1 ein das Eingangslicht L aus Homogenisierungsgründen mehrfach reflektierendes Bauelement vorgesehen ist, wird - wie in Fig. 3 wiederum schematisch dargestellt - dieses vorgesehene mehrfachreflektierende Bauelement vorzugsweise gleichzeitig als polarisationsrichtungsdrehendes Bauelement, analog zum Element 3 der Figuren 1 und 2, eingesetzt.

Gemäss Fig. 3 fällt Licht Lₑ auf ein mehrfachreflektierendes Bauelement 3a, wie erwähnt beispielsweise und bevorzugterweise auf den optischen Eingang E₃ₐ eines Lichttunnels, und wird, nach Mehrfachreflexion, intensitätshomogenisiert dem Eingang E₁ des Polarisationszustands-sensitiven Strahlteilers 1 zugeführt.

Am nun mit dem optischen Eingang E₁ identischen optischen Ausgang A₂ wird das nicht den erwünschten Polarisationszustand aufzeigende Licht Lₛ zurück zum Ausgang A₃ₐ des mehrfachreflektierenden Elementes 3a geleitet, wo es, nach Mehrfachreflexion, zurückreflektiert wird und als Anteil des Lichtes L mit nun gedrehter Polarisationsrichtung wiederum dem polarisationssensitiven Strahlteiler 1 zugeführt wird. Auf diese Art und Weise wird ein bereits aus Intensitätshomogenisierungsgründen vorgesehenes mehrfachreflektierendes Bauelement 3a, worin, wie noch zu erläutern sein wird, wiederum spezifische, diskrete polarisationsrichtungsdrehende Elemente, wie Retarder-Platten, vorgesehen sein können, ausgenützt, auch die erfindungsgsgemäss vorzusehende Polarisationszustands-Drehung, wie anhand des Blockes 3 in den Figuren 1 bzw. 2 erläutert wurde, zu realisieren.

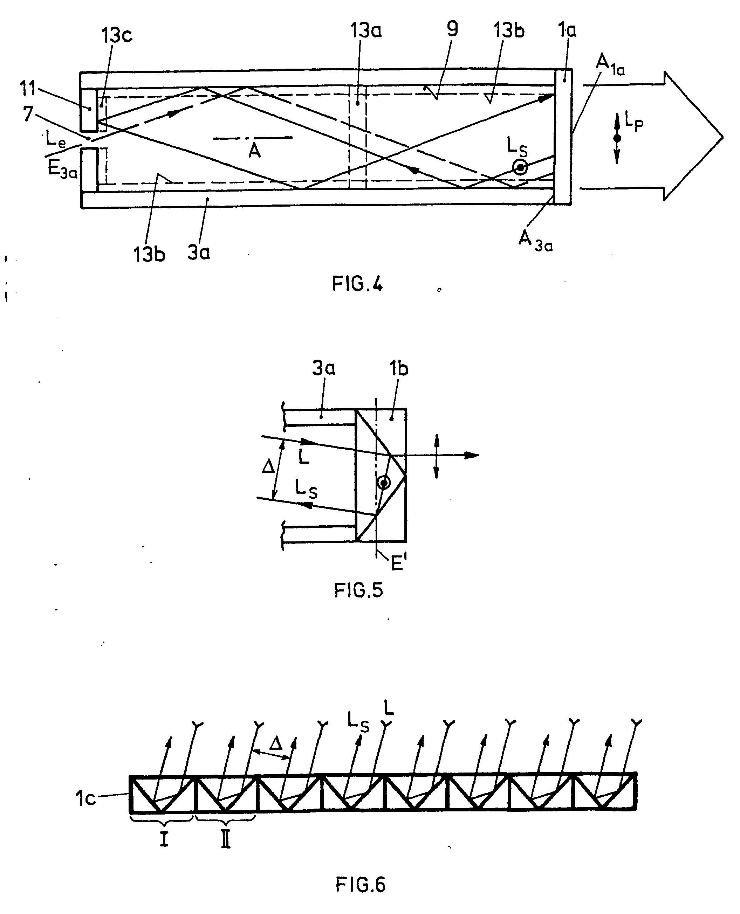

In Fig. 4 ist eine bevorzugte Ausführungsform des anhand von Fig. 3 erläuterten, bevorzugten Ausführungsprinzips dargestellt. Licht Lₑ, beispielsweise von einer Projektions-Lichtquelle, tritt durch die Apertur 7 am Eingang E₃ₐ des Lichttunnels 3a ein und wird, sofern es nicht annähernd parallel zur optischen Achse A des Lichttunnels verläuft, einmal oder mehrmals an den hochreflektierenden Innenperipheriewänden 9 des Lichttunnels 3a reflektiert.

Das einfallende Licht bzw. dessen beispielsweiser Strahlengang ist in Fig. 4 gestrichelt eingetragen.

Vorzugsweise unmittelbar am Ausgang A₃ₐ des Lichttunnels 3a ist der Polarisationszustands-sensitive Strahlteiler 1a vorgesehen, an dessen optischem Ausgang A₁ₐ das Licht Lₚ erwünschten Polarisationszustandes und mit homogen verteilter Intensität austritt.

Den Erläuterungen zu Fig. 3 folgend, wird das in vom erwünschten Polarisationszustand - hier P - abweichend polarisierte Licht Lₛ in den Lichttunnel 3a, wie mit dem beispielsweisen und mit ausgezogener Linienführung dargestellten Lichtstrahl in Fig. 4 eingetragen, in den Lichttunnel 3a zurückgeführt, wo es, nach MehrfachReflexion, schliesslich an dem die Apertur 7 umgebenden, innen reflektierend ausgebildeten Lichttunnelabschluss 11 reflektiert, mit vorerst durch die Mehrfach-Reflexion gedrehtem Polarisationszustand wiederum am Ausgang A₃ₐ des Lichttunnels dem Polarisationszustands-sensitiven Strahlteiler 1a zugeführt wird. Damit tritt wiederum das nach dieser Drehung in erwünschter Richtung bzw. in erwünschtem Zustand polarisierte Licht, als Anteil des Lichtes Lₚ, aus dem Strahlteiler 1a aus. Die reflektierende Innenwand des Abschlusses 11 ist dabei parallel zur reflektierenden Ebene bzw. deren gemittelte Lage E' (s. Fig. 5) am Strahlteiler 1a ausgerichtet.

In einer bevorzugten Ausführungsform der Realisation gemäss Fig. 4 wird zwischen der Eingangs-Apertur 7 und dem Ausgang A₃ₐ des Lichttunnels 3a bzw. dem Eingang des Polarisationszustands-sensitiven Strahlteilers 1a ein oder mehrere optische Elemente vorgesehen, die eine diskrete, gegebene Drehung des Polarisationszustands bewirken. Wie in Fig. 4 gestrichelt dargestellt, können derartige Polarisationszustands-drehende Elemente, wie beispielsweise und bevorzugt λ/4-Retarder-Platten, in Querschnittsebenen des Lichttunnels 3a, wie bei 13a dargestellt, vorgesehen sein und/oder an der Peripheriewandung des Lichttunnels 3a, wie bei 13b dargestellt und/oder an dem die EingangsApertur 7 definierenden, eingangsseitigen Abschluss 11 des Lichttunnels 3a, wie in Fig. 4 bei 13c dargestellt. Jedenfalls wird das Vorsehen eines derartigen Polarisationszustands-drehenden Elementes, insbesondere einer λ/4-Retarder-Platte, an dem die EingangsApertur 7 umgebenden Abschluss 11 - wie bei 13c eingetragen - bevorzugt. Aufgrund des zweimaligen Durchlaufens einer λ/4-Retarder-Strecke erfährt das Licht Lₛ daran eine 90°-Polarisationszustands-Drehung.

Wie bereits in Fig. 4 dargestellt, wird vorteilhafterweise als Polarisationszustands-sensitiver Strahlteiler 1a ein plattenförmiger eingesetzt. Dabei muss je nach auftretender Lichtintensität entschieden werden, ob ein solcher Polarisationsstrahlteiler auf Kunststoffbasis eingesetzt werden kann, oder ein Strahlteiler, der mit cholesterischer Filtern auf Glassubstrat aufgebaut ist.

Eingesetzt werden kann aber auch ein auf der Basis von drei beschichteten Glasprismen verwirklichter Polarisationstrahlteiler 1b, wie er in Fig. 5 mit dargestellt ist.

Wird ein möglichst geringer Parallelversatz Δ des auf den Strahlteiler 1b eintreffenden Lichtes L und Lₛ erwünscht, so wird bevorzugterweise und wie dies in Fig. 6 dargestellt ist, der nun als 1c bezeichnete Polarisationszustandsselektive Strahlteiler als Array von Drei-Prismen-Strukturen I, II ... realisiert. Je feiner dessen Struktur ist, desto geringer wird der erwähnte Parallelversatz Δ.

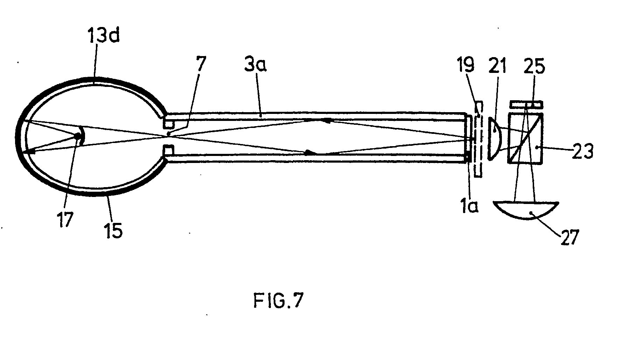

Mit Blick auf Fig. 4 ist im weiteren ersichtlich, dass Licht Lₛ, das nach den Reflexionen nicht auf den die Eingangsapertur 7 umgebenden Abschluss 11 fällt, sondern durch die Eingangsapertur 7 den Lichttunnel verlässt, verloren ist. In Fig. 7 ist, im Rahmen eines erfindungsgemässen Projektor-Beispiels, die Lösung dieses Problems gezeigt. Ein Licht einer Lichtquelle 17 auf die Eingangsapertur 7 fokussierender Reflektor 15 ist so ausgebildet, dass das vom Polarisationszustands-sensitiven Strahlteiler 1a bzw, 1b oder 1c nicht aus dem System entweichen kann und auch am Reflektor 15 in den Lichttunnel 3a reflektiert wird. Dabei kann der Reflektor 15 im wesentlichen entsprechend der Form einer Ulbricht-Kugel ausgelegt sein.

Der spezifisch erfindungsgemässe Projektor umfasst nebst den bereits beschriebenen Elementen einen Farb-Shutter 19 sowie ein Linsensystem 21, nebst einem weiteren Strahlteiler 23, der aufgrund des bereits erfindungsgemäss vorgesehenen Polarisationszustands-selektiven Strahlteilers 1a nicht zwingend als Polarisationszustands-sensitiver Strahlteiler ausgebildet sein muss. Schliesslich bezeichnet 27 eine Projektionslinse.

Im weiteren kann auch am Reflektor 15, wie anhand von Fig. 7 dargestellt und beschrieben, ein diskret Polarisationsrichtungs-drehendes Element vorgesehen sein, in Fig. 7 mit 13d bezeichnet.

Mit dem in Fig. 7 bevorzugterweise vorgesehenen Farb-Shutter, beispielsweise mit drei farbselektiven Transmissionsbereichen (nicht dargestellt), beispielsweise rot, grün und blau selektiv transmittierend, wird die Farbmodulation des Lichtes Lₚ vorgenommen. Bevorzugterweise ist der Farb-Shutter 19 als Farbrad ausgebildet. Als bildgebendes Element 25 wird bevorzugterweise ein Array in Reflexion arbeitender Lichtventile vorgesehen, in welchem pixelweise und bei Vorsehen des Farb-Shutters 19 mit letzterem zeitsynchron, die jeweiligen Pixelintensitäten am projizierten Bild angesteuert werden.

Der Polarisationszustands-sensitive Strahlteiler kann ein Element sein, das Licht des einen Wellenlängenbereichs Δλ₁ in einem ersten Polarisationszustand transmittiert und im dazu senkrechten, zweiten Polarisationszustand reflektiert, während es Licht eines anderen Wellenlängenbereichs Δλ₂ im zweiten Polarisationszustand transmittiert und im ersten reflektiert.

Aus dem Teiler tritt dann Licht mit wellenlängenabhängigem Polarisationszustand. Eine solche wellenlängenabhängige Polarisationsverteilung wird häufig bei Projektoren, insbesondere bei Projektoren basierend auf reflektiven LCD's benötigt. Das Polarisationszustands-sensitive Element kann dabei aus einem Retarder-Stack und einem nachgeschalteten Polarisationsstrahlteiler aufgebaut sein, gemeinsam als wellenlängenselektiver, Polarisationszustands-sensitiver Strahlteiler wirkend.

## Patentansprüche

1. Verfahren zur Erzeugung von Licht eines gegebenen Polarisationszustandes (P), bei dem ein Polarisationszustands-sensitiver Strahlteiler (1) an einem Eingang (E₁) mit Licht (L) beaufschlagt wird, Licht (Lₚ) des gegebenen Polarisationszustandes vom Strahlteiler (1) an einem ersten Strahlteilerausgang (A₁) ausgegeben wird, Licht (Lₛ) mit zum gegebenen Zustand (P) senkrechtem Polarisationszustand (S) bezüglich dieses Zustandes geändert und ausgegeben wird, wobei man mit dem Licht geänderten Polarisationszustandes den Polarisationszustands-sensitiven Strahlteiler am genannten Eingang (E₁) erneut beaufschlagt, **dadurch gekennzeichnet, dass** das Licht, vor Beaufschlagung des Eingangs des Polarisationszustands-sensitiven Strahlteilers, durch ein Lichttunnel-Bauelement mit reflektierender Peripherie geleitet wird und das Licht mit zum gegebenen Polarisationszustand senkrechtem Zustand in dieses Bauelement zurückgeführt und nach Reflexion darin, wiederum dem Eingang zugeführt wird.

2. Verfahren nach Anspruch 1, **dadurch gekennzeichnet, dass** man den Polarisationszustand durch Reflexion, vorzugsweise Mehrfachreflexion, ändert.

3. Verfahren nach einem der Ansprüche 1 oder 2, **dadurch gekennzeichnet, dass** man den Polarisationszustand zusätzlich durch eine vorgegebene Verzögerung, vorzugsweise mittels mindestens eines Retarder-Elementes, ändert.

4. Verfahren nach einem der Ansprüche 1 bis 3, **dadurch gekennzeichnet, dass** man an mindestens einem vom Licht beaufschlagten Bereich im Bauelement ein eine vorgegebene Polarisationszustandsänderung bewirkendes Element vorsieht, vorzugsweise mindestens eine Retarderplatte.

5. Verfahren nach einem der Ansprüche 1 bis 4, **dadurch gekennzeichnet, dass** man das Licht mittels einer Lichtquelle und eines Reflektors erzeugt und mindestens ein Teil des Lichtes mit zum gegebenen Polarisationszustand senkrechtem Zustand mindestens auch am Reflektor reflektiert und das dort reflektierte Licht dem Eingang des Polarisationszustands-sensitiven Strahlteilers zuführt.

6. Verfahren nach Anspruch 5, **dadurch gekennzeichnet, dass** man an der Reflektorfläche ein eine vorgegebene Polarisationszustandsänderung bewirkendes Element vorsieht, vorzugsweise eine Retarderplattenstruktur.

7. Polarisator-Anordnung mit einem Polarisationszustands-sensitiven Strahlteiler (1), der an einem optischen Eingang (E₁) mit Licht (L) beaufschlagt, Licht gegebenen Polarisationszustandes (Lₚ) an einem ersten optischen Ausgang (A₁) ausgibt und Licht dazu senkrechten Polarisationszustandes (Lₛ) an einem zweiten optischen Ausgang (A₂), wobei mit dem zweiten optischen Ausgang (A₂) der optische Eingang (E₃) eines Polarisationszustandsändernden Bauelementes (3) wirkverbunden ist, dessen optischer Ausgang (A₃) mit dem optischen Eingang (E₁) des Polarisationszustands-sensitiven Strahlteilers (1) wirkverbunden ist, **dadurch gekennzeichnet, dass** mit dem Eingang (E₁) des Strahlteilers (1) der Ausgang (A₃ₐ) eines Lichttunnel-Bauelementes (3a) wirkverbunden ist, welcher Ausgang (A₃ₐ), als Eingang, mit dem zweiten Ausgang (A₂) des Lichtteilers wirkverbunden ist.

8. Anordnung nach Anspruch 7, **dadurch gekennzeichnet, dass** zwischen Eingang (E₃) und Ausgang (A₃) des Bauelementes (3) Licht reflektiert wird, vorzugsweise mehrfach, wobei der Polarisationszustand jeweils geändert wird.

9. Anordnung nach einem der Ansprüche 7 oder 8, **dadurch gekennzeichnet, dass** das Bauelement (13) mindestens ein den Polarisationszustand um einen gegebenen Winkel änderndes Bauelement umfasst, vorzugsweise mindestens eine Retarderplatte.

10. Anordnung nach einem der Ansprüche 7 bis 9, **dadurch gekennzeichnet, dass** Eingang (E₁) und zweiter Ausgang (A₂) des Strahlteilers (1) durch denselben Bereich des Strahlteilers (1) gebildet sind.

11. Anordnung nach einem der Ansprüche 7 bis 10, **dadurch gekennzeichnet, dass** am Eingang des Lichttunnel-Bauelementes (3a) eine innenreflektierende Stirnpartie (11) mit Apertur (7) vorgesehen ist.

12. Anordnung nach einem der Ansprüche 7 bis 11, **dadurch gekennzeichnet, dass** im Lichttunnel-Bauelement (3a) mindestens ein eine vorgegebene Polarisationszustandsänderung bewirkendes Bauelement (13a, 13b, 13c) vorgesehen ist.

13. Anordnung nach einem der Ansprüche 7 bis 12, **dadurch gekennzeichnet, dass** der Strahlteiler eine Prismenanordnung, eine reflektierende Polarisationsfolie oder einen cholesterischen Polarisator umfasst.

14. Anordnung nach einem der Ansprüche 7 bis 12, **dadurch gekennzeichnet, dass** das von Strahlteiler am ersten Ausgang ausgegebene Licht in gegebenem Polarisationszustand von dessen Wellenlänge abhängig ausgegeben wird.

15. Beleuchtungsanordnung mit einer Strahlteileranordnung nach einem der Ansprüche 10 bis 14, **dadurch gekennzeichnet, dass** dem Lichttunnel-Bauelement eingangsseitig eine Lichtquelle (17) mit Reflektor (15) vorgeschaltet ist und dabei der Reflektor (17) zum Lichttunnel-Bauelement einen mindestens nahezu geschlossenen Raum definiert.

16. Beleuchtungsanordnung nach Anspruch 15, **dadurch gekennzeichnet, dass** der Reflektor mit einer eine gegebene Polarisationsrichtungsdrehung bewirkenden Struktur (13d) versehen ist.

17. Projektorsystem mit einer Anordnung nach einem der Ansprüche 10 bis 14 oder einer Beleuchtungsanordnung nach Anspruch 15 oder 16 und einem dem Eingang (E₁) des Strahlteilers vorgeschalteten Farb-Shutter (19).

18. Verwendung des Verfahrens nach einem der Ansprüche 1 bis 6 und/oder des Strahlteilers nach einem der Ansprüche 7 bis 14 und/oder der Beleuchtungsanordnung nach Anspruch 15 oder 16 für Projektoranordnungen.

## Claims

1. Method for generating light of a given polarisation state (P), in which a polarisation state-sensitive beam splitter (1) at an inlet (E₁) is exposed to light (L), light (Lₚ) with the given polarisation state is output from the beam splitter (1) at a first beam splitter outlet (A₁), light (Lₛ) with polarisation state (S) perpendicular to the given state (P) is modified in relation to this state and output, where the light with the modified polarisation state is applied again to the polarisation state-sensitive beam splitter at the said inlet (E₁), **characterised in that** before reaching the inlet of the polarisation state-sensitive beam splitter, the light is passed through a light tunnel component with reflective periphery and the light with polarisation state perpendicular to the given state is returned to this component and after reflection therein again supplied to the inlet.

2. Method according to claim 1, **characterised in that** the polarisation state is modified by reflection, preferably multiple reflection.

3. Method according to one of claims 1 or 2, **characterised in that** the polarisation state is also modified by a prespecified delay, preferably by means of at least one retarder element.

4. Method according to one of claims 1 to 3, **characterised in that** in at least one area of the component exposed to the light, an element causing a prespecified change in polarisation state is provided, preferably at least one retarder plate.

5. Method according to one of claims 1 to 4, **characterised in that** the light is generated by means of a light source and a reflector and at least part of the light with polarisation state perpendicular to the given state is also reflected at least at the reflector and the light reflected there is supplied to the inlet of the polarisation state-sensitive beam splitter.

6. Method according to claim 5, **characterised in that** at the reflector surface is provided an element causing a prespecified change in polarisation state, preferably a retarder plate structure.

7. Polariser arrangement with a polarisation state-sensitive beam splitter (1) which at an optical inlet (E₁) is exposed to light (L), light (Lₚ) with a given polarisation state is output at a first optical outlet (A₁) and light (Lₛ) with polarisation state (Lₛ) perpendicular thereto is output at a second optical outlet (A₂), where actively connected with the second optical outlet (A₂) is the optical inlet (E₃) of a polarisation state-changing component (3), the optical outlet (A₃) of which is actively connected with the optical inlet (E₁) of the polarisation state-sensitive beam splitter (1), **characterised in that** actively connected with the inlet (E₁) of the polarisation state-sensitive beam splitter (1) is the outlet (A₃ₐ) of a light tunnel component (3a), which outlet (A₃ₐ) as an inlet is actively connected with the second outlet (A₂) of the light splitter.

8. Arrangement according to claim 7, **characterised in that** between the inlet (E₃) and outlet (A₃) of the component (3), light is reflected, preferably repeatedly, the polarisation state being changed each time.

9. Arrangement according to one of claims 7 or 8, **characterised in that** the component (13) comprises at least one component changing the polarisation state by a given angle, preferably at least one retarder plate.

10. Arrangement according to one of claims 7 to 9, **characterised in that** the inlet (E₁) and the second outlet (A₂) of the beam splitter (1) are formed by the same area of the beam splitter (1).

11. Arrangement according to one of claims 7 to 10, **characterised in that** at the inlet to the light tunnel component (3a) is provided an internally reflecting face part (11) with aperture (7).

12. Arrangement according to one of claims 7 to 11, **characterised in that** in the light tunnel component (3a) is provided at least one component (13a, 13b, 13c) causing a prespecified change in polarisation state.

13. Arrangement according to one of claims 7 to 12, **characterised in that** the beam splitter comprises a prism arrangement, a reflective polarisation film or a cholesteric polariser.

14. Arrangement according to one of claims 7 to 12, **characterised in that** the light output from the beam splitter at the first outlet is output in the given polarisation state depending on its wavelength.

15. Lighting arrangement with a beam splitter arrangement according to one of claims 10 to 14, **characterised in that** connected before the light tunnel component on the inlet side is a light source (17) with reflector (15), and the reflector (15) to the light tunnel component defines an at least almost enclosed room.

16. Lighting arrangement according to claim 15, **characterised in that** the reflector is fitted with a structure (13d) causing a given polarisation direction rotation.

17. Projector system with an arrangement according to one of claims 10 to 14 or a lighting arrangement according to claim 15 or 16 and a colour shutter (19) connected before the inlet (E₁) of the beam splitter.

18. Use of the method according to one of claims 1 to 6 and/or the beam splitter according to one of claims 7 to 14 and/or the lighting arrangement according to claim 15 or 16 for projector arrangements.

## Revendications

1. Procédé pour produire une lumière présentant un état de polarisation donné (P), selon lequel un séparateur de faisceau sensible à l'état de polarisation (1) est sollicité au niveau d'une entrée (E₁) par une lumière (L), une lumière (Lₚ) présentant l'état de polarisation donné est émise par le séparateur de faisceau (1) au niveau d'une première sortie de séparateur de faisceau (A₁), et une lumière (Lₛ) présentant un état de polarisation (S) perpendiculaire à l'état donné (P) subit une modification de cet état et est émise, étant précisé qu'avec la lumière présentant un état de polarisation modifié, on sollicite une nouvelle fois le séparateur de faisceau sensible à l'état de polarisation au niveau de l'entrée (E₁),
**caractérisé en ce que** la lumière, avant de solliciter l'entrée du séparateur de faisceau sensible à l'état de polarisation, traverse un composant formant tunnel lumineux dont la périphérie est réfléchissante, et la lumière présentant un état perpendiculaire à l'état de polarisation donné est ramenée dans ce composant et, après avoir été réfléchie dans celui-ci, est à nouveau amenée jusqu'à ladite entrée.

2. Procédé selon la revendication 1, **caractérisé en ce qu'**on modifie l'état de polarisation par réflexion, de préférence par réflexion multiple.

3. Procédé selon la revendication 1 ou 2, **caractérisé en ce qu'**on modifie en supplément l'état de polarisation grâce à un retardement prédéfini, de préférence à l'aide d'au moins un élément retardateur.

4. Procédé selon l'une des revendications 1 à 3, **caractérisé en ce qu'**on prévoit sur au moins une zone sollicitée par la lumière, dans le composant, un élément qui provoque une modification prédéfinie de l'état de polarisation, de préférence au moins une plaque de retardement.

5. Procédé selon l'une des revendications 1 à 4, **caractérisé en ce qu'**on produit la lumière à l'aide d'une source lumineuse et d'un réflecteur, une partie au moins de la lumière présentant un état perpendiculaire à l'état de polarisation donné est aussi réfléchie au moins au niveau du réflecteur et la lumière réfléchie à cet endroit est amenée jusqu'à l'entrée du séparateur de faisceau sensible à l'état de polarisation.

6. Procédé selon la revendication 5, **caractérisé en ce qu'**on prévoit au niveau de la surface de réflecteur un élément qui provoque une modification prédéfinie de l'état de polarisation, de préférence une structure de plaques de retardement.

7. Dispositif polarisateur comprenant un séparateur de faisceau sensible à l'état de polarisation (1) qui est sollicité au niveau d'une entrée optique (E₁) avec une lumière (L) et qui émet au niveau d'une première sortie optique (A₁) une lumière présentant un état de polarisation donné (Lₚ) et au niveau d'une seconde sortie optique (A₂) une lumière présentant un état de polarisation (Lₛ) perpendiculaire à l'état donné, étant précisé qu'on met en relation fonctionnelle avec la seconde sortie optique (A₂) l'entrée optique (E₃) d'un composant modificateur d'état de polarisation (3) dont la sortie optique (A₃) est en relation fonctionnelle avec l'entrée optique (E₁) du séparateur de faisceau sensible à l'état de polarisation (1),
**caractérisé en ce qu'**on met en relation fonctionnelle avec l'entrée (E₁) du séparateur de faisceau (1) la sortie (A₃ₐ) d'un composant formant tunnel lumineux (3a), laquelle sortie (A₃ₐ) est en relation fonctionnelle, comme entrée, avec la seconde sortie (A₂) du séparateur de faisceau.

8. Dispositif selon la revendication 7, **caractérisé en ce que** la lumière est réfléchie, de préférence plusieurs fois, entre l'entrée (E₃) et la sortie (A₃) du composant (3), l'état de polarisation étant à chaque fois modifié.

9. Dispositif selon la revendication 7 ou 8, **caractérisé en ce que** le composant (13) comprend au moins un composant qui modifie d'un angle donné l'état de polarisation, de préférence une plaque de retardement.

10. Dispositif selon l'une des revendications 7 à 9, **caractérisé en ce que** l'entrée (E₁) et la seconde sortie (A₂) du séparateur de faisceau (1) sont formées par la même zone du séparateur de faisceau (1).

11. Dispositif selon l'une des revendications 7 à 10, **caractérisé en ce qu'**il est prévu à l'entrée du composant formant tunnel lumineux (3a) une partie frontale à réflexion intérieure (11) avec une ouverture (7).

12. Dispositif selon l'une des revendications 7 à 11, **caractérisé en ce qu'**il est prévu dans le composant formant tunnel lumineux (3a) au moins un composant (13a, 13b, 13c) qui provoque une modification prédéfinie de l'état de polarisation.

13. Dispositif selon l'une des revendications 7 à 12, **caractérisé en ce que** le séparateur de faisceau comprend un dispositif à prismes, un film de polarisation réfléchissant ou un polarisateur cholestérique.

14. Dispositif selon l'une des revendications 7 à 12, **caractérisé en ce que** la lumière émise par le séparateur de faisceau à la première sortie est émise dans l'état de polarisation donné, en fonction de sa longueur d'onde.

15. Dispositif d'éclairage avec un dispositif séparateur de faisceau selon l'une des revendications 10 à 14, **caractérisé en ce qu'**il est prévu côté entrée, monté en amont du composant formant tunnel lumineux, une source lumineuse (17) avec un réflecteur (15), le réflecteur (15) définissant avec le composant formant tunnel lumineux un espace au moins quasiment fermé.

16. Dispositif d'éclairage selon la revendication 15, **caractérisé en ce que** le réflecteur est pourvu d'une structure (13d) qui provoque une rotation donnée du sens de polarisation.

17. Système de projecteur avec un dispositif selon l'une des revendications 10 à 14 ou avec un dispositif d'éclairage selon la revendication 15 ou 16 et avec un obturateur couleur (19) monté en amont de l'entrée (E₁) du séparateur de faisceau.

18. Utilisation du procédé selon l'une des revendications 1 à 6 et/ou du séparateur de faisceau selon l'une des revendications 7 à 14 et/ou du dispositif d'éclairage selon la revendication 15 ou 16 pour des dispositifs projecteurs.
